# EUROPEAN PATENT SPECIFICATION

(11) **EP 2 000 023 B1**
(45) Date of publication and mention of the grant of the patent: **23.01.2013**
(21) Application number: 08009355.2
(22) Date of filing: 21.05.2008
(51) Int. Cl.: A01K 11/00

(54) **Data acquisition apparatus**
Datenerfassungsgerät
Appareil d'acquisition de données

(30) Priority: 22.05.2007 GB 0709795
(43) Date of publication of application: 10.12.2008
(73) Proprietor: Icerobotics Limited, Roslin Midlothian EH25 9TT (GB)
(72) Inventor: Boyce, Robert, Edinburgh EH6 4LD (GB); Lewis, Oliver, Broxburn EH52 6JW (GB); Dripps, Robin, Edinburgh EH16 5XX (GB)
(74) Representative: Hindle, Alistair Andrew

(56) References cited:
- US-A1- 2004 155 782
- US-A1- 2006 000 420

## Description

### Field of the invention

The present invention relates to a data acquisition and transmission apparatus and method and in particular but not exclusively to apparatus for acquiring data from a roaming beast, such as a cow, and transmitting the acquired data to a stationary data receiver.

### Background to the invention

It is known to attach data acquisition apparatus to a beast, such as a cow, and to acquire and store data as the beast roams. Periodically stored data is transmitted wirelessly from the data acquisition apparatus to host apparatus, such as a Personal Computer (PC), for analysis and long term storage.

US 2004/155782 (Letkomiller) discloses Inductively powered data acquisition apparatus operable to communicate wirelessly. However, the disclosed device does not record date while the wireless data communications apparatus is inoperative.

The present inventors have appreciated known data acquisition apparatus to have shortcomings, Accordingly, it is an aim for the present invention to provide improved date acquisition and transmission apparatus. It is a further aim for the present invention to provide improved data acquisition and transmission apparatus In which data is transmitted wirelessly from a mobile apparatus configured to be attached to a beast, such as a cow.

### Statement of invention

The present Invention has been devised in the light of the above mentioned appreciation. According to a first aspect of the present invention there is provided data acquisition and transmission apparatus comprising:
mobile apparatus configured to be attached to a beast, the mobile apparatus comprising: data acquisition apparatus configured to acquire and store data; wireless data communications apparatus, which is switchable between an operative condition. In which stored data is transmitted wirelessly, and an Inoperative condition in which substantially no electrical power is consumed by the wireless device communication apparatus; and characterised by a trigger receiver configured to change the wireless date communications apparatus from the inoperative condition to the operative condition in dependence upon a trigger signal from trigger receiver; wherein the data acquisition apparatus acquires and stores data whilst the wireless data communications apparatus is in the inoperative condition.

In use, the mobile apparatus Is attached to a beast, such as a cow, and the data acquisition apparatus acquires and stores data while the beast roams. The trigger signal is provided at a convenient time and/or location to change the wireless data communications apparatus from the inoperative condition to the operative condition, in which stored data is transmitted wirelessly. In the inoperative condition, substantially no electrical power Is consumed by the wireless data communications apparatus whereas in the operative condition electrical power is consumed by the wireless data communications apparatus when transmitting stored data, e.g. to a nearby host apparatus.

Wireless data communications apparatus and in particular wireless data communications apparatus capable of transmitting appreciable amounts of data in a short period of time can have significant power consumption requirements. The wireless data communications apparatus may comprise active electronic circuitry, i.e. electronic circuitry comprising one or more solid state devices. Where the mobile apparatus Is battery powered, such significant power consumption requirements can impose a requirement for undesirably frequent replacement or recharging of batteries. Changing the wireless data communications apparatus from the inoperative condition to the operative condition, e.g. when it is required to transmit data from the mobile apparatus, can provide for a saving in power consumption and thus an extension to battery life.

In addition, where there is a plurality of mobile apparatus the capability to change the wireless data communications apparatus from the inoperative condition to the operative condition provides the means to select one of the plurality of mobile apparatus for transmission of its stored data. For example, mobile apparatus may be attached to each cow in a herd of cattle. Thus, the present invention may be used to select each of the mobile apparatus in turn for transmission of its stored data, e.g. to a host apparatus, such as a PC. By way of comparison, arbitration to prevent two or more mobile apparatus communicating with a host apparatus according to an alternative approach not forming part of the invention would be liable to increase power consumption requirements.

More specifically, the data acquisition and transmission apparatus may further comprise a trigger transmitter separate from the mobile apparatus, the trigger transmitter being configured to generate the trigger signal.

The trigger transmitter may be separate from the mobile apparatus, e.g. the trigger transmitter may be situated at a fixed location by which the beast passes during its roaming. The trigger transmitter may be operated, e.g. by a user of the apparatus, to generate the trigger signal, which causes the wireless data communications apparatus to change from the inoperative condition to the operative condition.

Alternatively or in addition, the trigger transmitter and the trigger receiver may be configured for transmission of the trigger signal wirelessly to the trigger receiver.

More specifically, the wireless trigger signal may have a carrier signal of a lower power than a carrier signal of wirelessly transmitted stored data. The wireless trigger signal may have a carrier signal of a lower frequency than a carrier signal of wirelessly transmitted stored data. Generally, electrical circuits for transmission and reception of wireless signals consume less power when the carrier signal is of lower frequency. More specifically, the carrier signal of the wireless trigger signal may be at least ten times less than the carrier signal of the wirelessly transmitted stored data. For example, the carrier signal of the wireless trigger signal may be 136.5 kHz and the carrier signal of the wirelessly transmitted stored data may be 2.4 GHz.

Alternatively or in addition, the trigger transmitter may be configured to be stationary when in use and to provide the trigger signal over a predetermined range. Thus, the trigger signal may be received by the trigger receiver when the mobile apparatus moves within the predetermined range of the stationary trigger transmitter.

Alternatively or in addition, the predetermined range may be less than 5 m. More specifically, the predetermined range may be substantially 1 m.

Alternatively or in addition, at least one of the trigger signal and a signal conveying the transmitted stored data may be a radio frequency signal.

Alternatively or in addition, the trigger receiver may comprise a receiver device that is operative upon receipt of the trigger signal and in which the receiver device is a passive electrical device, such as a coil. The term passive device as used herein means a linear as opposed to a solid state electronic device. The use of a passive electrical device can provide for substantially no power consumption by the receiver device.

More specifically, the trigger receiver may comprise an electronic device, such as a half-wave rectifier, that is operative to pass one of a positive and a negative half of a sinusoidal signal produced by the receiver device.

More specifically, the trigger receiver may comprise signal conditioning circuitry operative to convert the one of the positive and the negative half of the sinusoidal signal to a square wave signal.

Alternatively or in addition, the trigger transmitter may be configured to provide a trigger signal comprising a control signal.

More specifically, the control signal may comprise a channel select signal and the wireless communications apparatus may be configured to transmit stored data on a selected one of a plurality of channels, the channel being selected in dependence upon the channel select signal. The trigger signal may be modulated by the channel select signal, e.g. by on-off keying.

Alternatively or in addition, the data acquisition and transmission apparatus may further comprise a wireless data transceiver, such as a PC modified to receive wireless data, which is configured to be stationary when in use, the wireless data transceiver being configured to receive stored data transmitted by the wireless data communications apparatus. The wireless data transceiver may, in use, be situated at a location spaced apart from the trigger transmitter. The wireless data transceiver may be used for storage and analysis of received data.

Alternatively or in addition, the wireless data communications apparatus may be configured to transmit stored data over a maximum range of substantially 200 m. More specifically, the wireless data communications apparatus may be configured to transmit stored data over a range of substantially 100 m.

Alternatively or in addition, the wireless data communications apparatus may be configured to receive wireless data. Such received wireless data may, for example, be used to configure the mobile apparatus.

Alternatively or in addition, the data acquisition apparatus may be configured to acquire data relating to movement of the beast to which the mobile apparatus is attached.

More specifically, the data acquisition apparatus may comprise at least one of: an accelerometer, such as a three axis accelerometer; a mercury switch; and a gyroscope.

Alternatively or in addition, the mobile apparatus may be configured to be attached to a cow and to be operative to acquire data relating to movement of at least part of the anatomy, e.g. the leg, of the cow.

According to a second aspect of the present invention, there is provided a method of acquiring and transmitting data, the method comprising:
acquiring and storing data by means of data acquisition apparatus of mobile apparatus, the mobile apparatus being attached to a beast;
receiving a trigger signal in a trigger receiver of the mobile apparatus and changing a wireless data communications apparatus of the mobile apparatus from an inoperative condition to an operative condition in dependence upon the received trigger signal; and
transmitting stored data wirelessly from the mobile device by means of wireless data communications apparatus when the wireless data communications apparatus is in the operative condition.

More specifically, the method may further comprise generating the trigger signal by means of a trigger transmitter, which is separate from the mobile apparatus.

Further embodiments of the second aspect of the present invention may comprise one or more features of the first aspect of the present invention.

### Brief description of the drawings

The present invention will now be described by way of example only with reference to the following drawings, of which:
Figure 1 is a schematic view of the present application in use in a milking parlour;
Figure 2 is a block diagram of the present invention;
Figure 3 is a block diagram of the mobile apparatus represented in Figure 2;
Figure 4 is a block diagram of the trigger transmitter represented in Figure 2;
Figure 5 is a block diagram of the wireless data transceiver represented in Figure 2; and
Figure 6 is a circuit diagram of the trigger receiver represented in Figure 3.

### Specific description

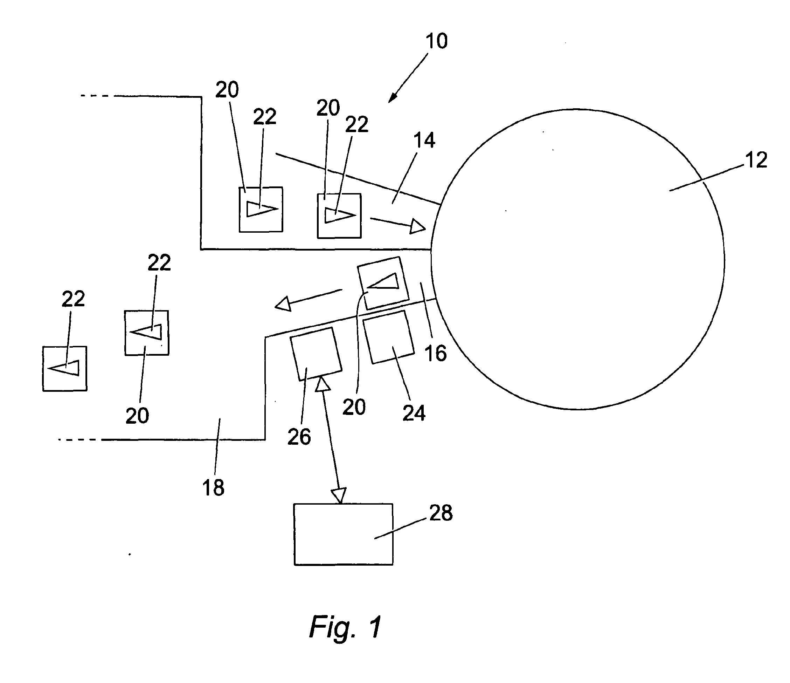

Figure 1 shows a milking parlour arrangement 10 in which the present invention is applied. The milking parlour arrangement 10 comprises a milking parlour 12 of known, circular footprint having an entrance 14 and an exit 16, which provides access to a byre 18 or the like. In accordance with known practice cattle are guided into the milking parlour 12 though the entrance 14. When milking is complete the cattle leave the milking parlour 12 through the exit 16. Mobile apparatus 22 of the present invention is attached to each cow 20; the mobile apparatus is described in more detail below. The mobile apparatus is attached to the cow by means of a strap or the like, which is held in place by a fastener. A trigger transmitter 24 of the present invention is located at the exit 16 from the milking parlour 12 and a wireless data transceiver 26 of the present invention is located closer to the byre 18. A server 28 is located at a convenient location spaced apart from the milking parlour, e.g. in a farmhouse. The mobile apparatus 22, the trigger transmitter 24, the wireless data transceiver 26 and the server 28 together constitute data acquisition and transmission apparatus according to the present invention. Each of the trigger transmitter 24, the wireless data transceiver 26 and the server 28 are discussed in more detail below.

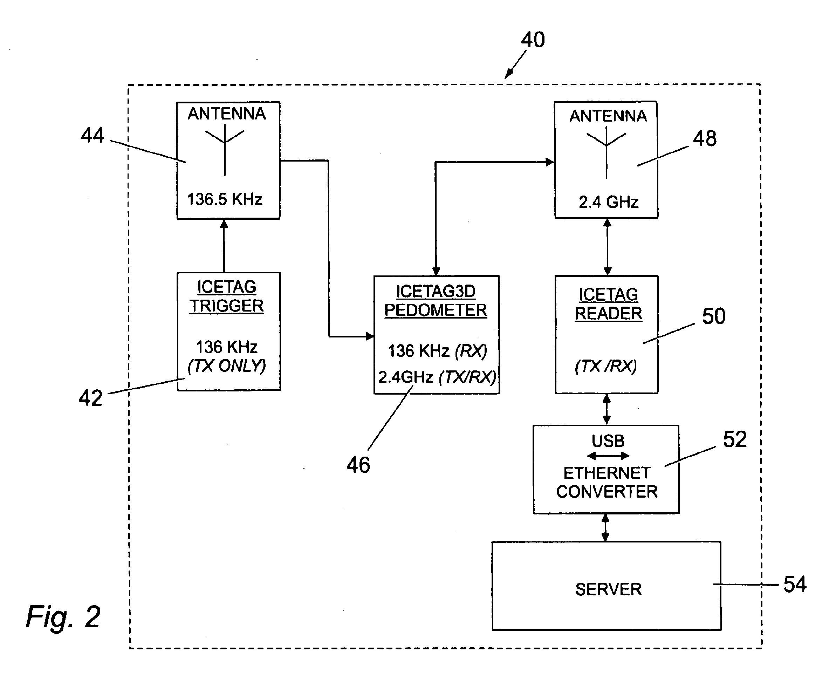

Figure 2 provides a block diagram representation of the data acquisition and transmission apparatus 40. The trigger transmitter comprises electronic circuitry 42 and a radio frequency antenna 44. The mobile apparatus is represented by component 46. The wireless data transceiver comprises an antenna 48, electronic circuitry 50 and a USB to Ethernet converter 52, which is electrically connected to the server 54.

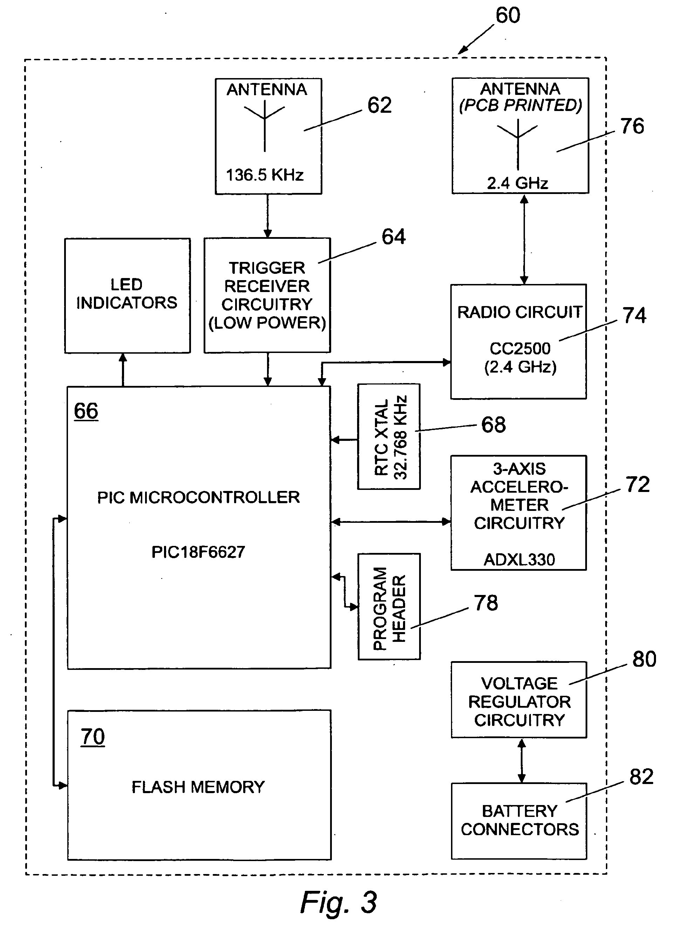

A detailed block diagram of the mobile apparatus 22, 46, 60 is shown in Figure 3. The mobile apparatus 60 comprises a first antenna 62, which is operative to receive radio frequency signals at 136.5 kHz. The first antenna 62 provides a signal to a trigger receiver 64, which in turn provides a signal to a PIC 18F6627 microcontroller 66. A crystal 68 provides a 32.768 kHz timing signal for the microcontroller 66. The mobile apparatus 60 also comprises flash memory 70, which is driven by the microcontroller 66. The flash memory 70 is a 256 Mbit integrated circuit from ST Microelectronics (part NAND 256W3A2BN6E). An ADXL330 three-axis accelerometer 72 from Analog Devices provides an output signal to an integral analogue-to-digital converter of microcontroller 66. A CC2500 2.4 GHz transceiver 74 from Texas Instruments is driven by the microcontroller 66 with the transceiver in turn being connected to a second, 2.4 GHz antenna 76, which is printed on the printed circuit board (not shown) that supports the electronic circuits of the mobile apparatus. The mobile apparatus also comprises support components, such as a header 78, which provides input/output for programming by an external device, such as a Personal Computer (PC), and a voltage regulator 80 and connectors 82 for batteries (not shown), which provide power for operation of the mobile apparatus 60.

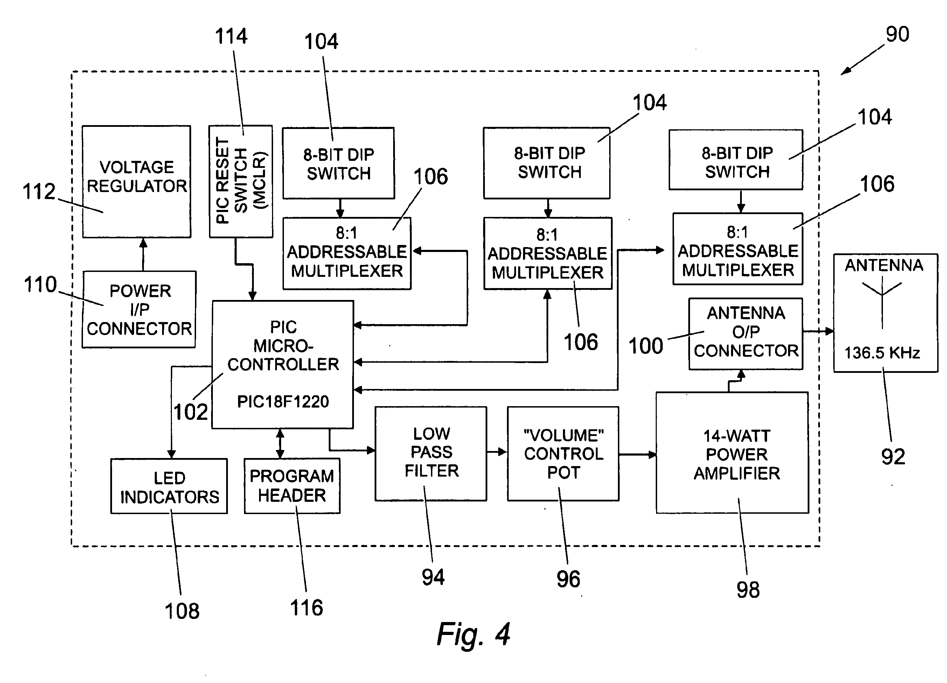

A detailed block diagram of the trigger transmitter 24, 90 is shown in Figure 4. The trigger transmitter 90 comprises a radio frequency antenna 92, which is operative to transmit radio frequency signals at a frequency of 136.5 kHz. The antenna 92 is driven by circuitry in accordance with established design practice comprising a low pass filter 94, an amplitude control potentiometer 96 and a 14 Watt power amplifier 98 via an antenna connector 100. The antenna drive circuitry is driven from an output of a PIC 18F1220 microcontroller 102. Configuration of the trigger transmitter 90 is by means of three 8-bit DIP switches 104 with each DIP switch interfacing via an 8:1 multiplexer 106 with a port of the microcontroller 102. The DIP switches are used to select a channel code; the channel code is discussed below in more detail. The trigger transmitter also comprises support components, such as: LED indicators 10, which provide an indication to an operator of the status of the trigger transmitter; a power input connector 110 and an associated voltage regulator 112; a reset switch 114, which is operative to apply a master reset signal to the microcontroller 102; and a header 116, which provides input/output for programming by an external device, such as a Personal Computer (PC).

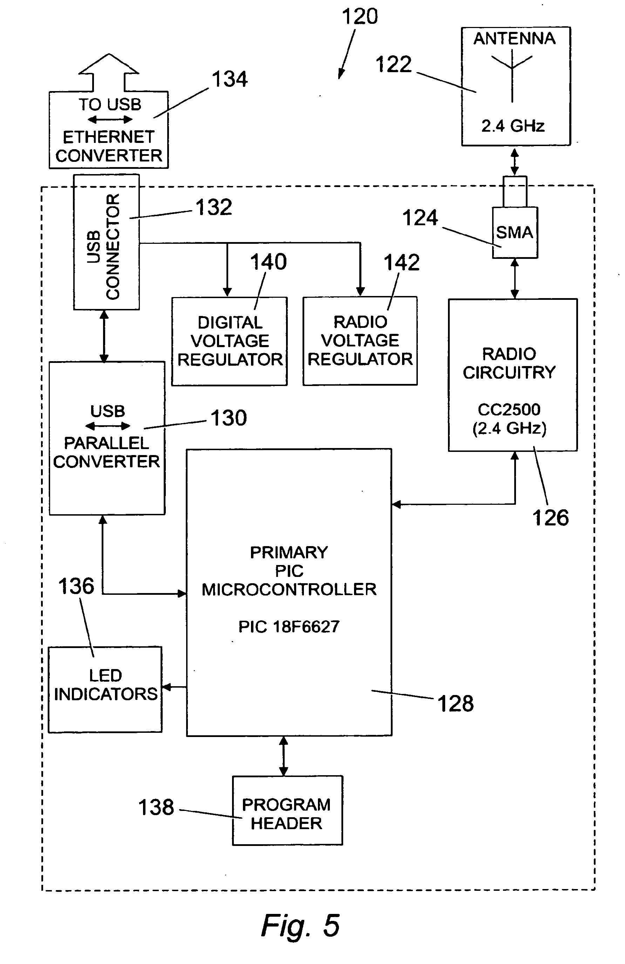

A detailed block diagram of the wireless data transceiver 26, 120 is shown in Figure 5. The wireless data transceiver 120 comprises a 2.4 GHz antenna 122, which is connected by an SMA connector 124 to a CC2500 2.4 GHz transceiver 126 from Texas Instruments. The transceiver 126 is connected to a PIC 18F6627 microcontroller 128. The microcontroller 128 is also connected to a parallel to USB connector 130, which in turn is connected to a USB connector 132. The USB connector 132 is connected to a USB to Ethernet converter 134, which is used to provide an electrical connection with the server 28 shown in Figure 1. The wireless data transceiver 120 also comprises support components, such as: LED indicators 136, which provide an indication to an operator of the status of the wireless data transceiver; a header 138, which provides input/output for programming by an external device, such as a Personal Computer (PC); a digital voltage regulator 140, which receives an input signal from a power line of the USB connector 132 and provides a regulated voltage to the digital circuitry; and a radio voltage regulator 142, which receives an input signal from the power line of the USB connector 132 and provides a regulated voltage to the radio frequency circuitry.

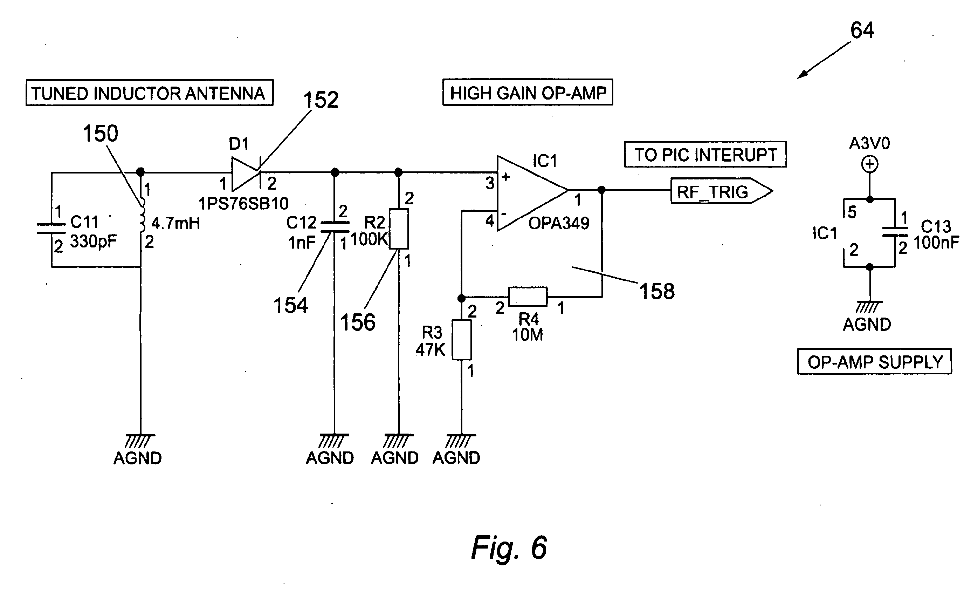

A circuit diagram of the trigger receiver 64 of Figure 3 is shown in Figure 6. The trigger receiver 64 comprises a 4.7mH tuned inductor antenna 150 (C & D Technologies, part number 22R475C) and signal conditioning circuitry, which is operative to convert an alternating current signal produced by the inductor antenna 150 to a square wave signal appropriate for driving an interrupt input of the microcontroller 66 of the mobile apparatus. The signal conditioning circuitry comprises a series connected diode 152 and a capacitor 154 and a resistor 156 connected to ground at the diode output. An opamp 158 in a voltage amplifier configuration receives an output from the diode and provides an output to the interrupt input of the microcontroller. Determination of values for components of the signal conditioning circuitry is a routine matter for the skilled person.

Operation of the data acquisition and transmission apparatus of the present invention described above with reference to Figures 1 to 6 will now be described. As mentioned above with reference to Figure 1, mobile apparatus 22, 46 is attached to a leg of each cow 20. As the cow roams, movement of the leg is measured by the three-axis accelerometer 72 and measurements are acquired by the microcontroller 66 and stored in the flash memory 70. Such measurements can provide useful information on the health and wellbeing of the cow. The trigger transmitter 24, 90 is situated at a location where it is desired to recover data stored in the flash memory 70 of the mobile apparatus, e.g. at the exit from a milking parlour as shown in Figure 1.

In an un-illustrated form of the invention, the trigger transmitter is in a portable form such that it can be carried by an operator. A trigger transmitter in this form comprises the same components as described above with reference to Figure 4. However, the present form of trigger transmitter is enclosed in a housing that provides for hand portability. Also, the trigger transmitter is battery powered. Typically, the mobile trigger transmitter is of short range, e.g. less than 1 m, compared to the trigger transmitter described with Figure 4, to thereby conserve on battery power. The mobile transmitter can, for example, be used to retrieve data from a cow instead of the trigger receiver described above with reference to Figure 4.

When it is desired to recover data the trigger transmitter is switched on such that it continuously transmits a 136.5 kHz radio frequency signal from its antenna 92. When a cow is within 1 m of the trigger transmitter 24, 90 the radio frequency signal transmitted by the trigger transmitter 24, 90 is detected by the first antenna 62, 150 of the mobile apparatus. As described above with reference to Figure 6, the received signal generates an interrupt signal in the mobile apparatus microcontroller 66. In response to the interrupt signal the microcontroller activates the CC2500 2.4 GHz transceiver 74 such that the mobile apparatus is capable of transmitting and receiving by way of the second, high power 2.4 GHz antenna 76. The 136.5 kHz radio frequency signal transmitted by the trigger transmitter 24, 90 has a channel code impressed on its carrier signal by means of on-off keying such that the channel code data has a data rate of between substantially 10 mS and substantially 15 mS. The channel code is determined by the microcontroller 66 and the channel of the CC2500 2.4 GHz transceiver 74 selected accordingly. The mobile apparatus microcontroller 66 then engages with the microcontroller 128 of the wireless data transceiver 26, 120 by way of the radio frequency link established between their respective 2.4 GHz antennas 76, 122. Then the data stored in the flash memory 70 of the mobile apparatus is transmitted to the wireless data transceiver 26, 120 over the radio frequency link. When data transmission is complete, the mobile apparatus microcontroller 66 deactivates the CC2500 2.4 GHz transceiver 74 to thereby reduce power consumption to its previously low level. In accordance with established practice, data received by the wireless data transceiver 26, 120 is electrically conveyed to the server 28 for analysis and long term storage.

## Claims

1. Data acquisition and transmission apparatus (10) comprising:
mobile apparatus (22) configured to be attached to a beast (20), the mobile apparatus comprising: data acquisition apparatus configured to acquire and store data; wireless data communications apparatus (74), which is switchable between an operative condition, in which stored data is transmitted wirelessly, and an inoperative condition in which substantially no electrical power is consumed by the wireless device communication apparatus (74); and **characterised by** a trigger receiver (64) configured to change the wireless data communications apparatus from the inoperative condition to the operative condition in dependence upon a trigger signal from trigger receiver (64), wherein the data acquisition apparatus acquires and stores data whilst the wireless data communications apparatus (74) is in the inoperative condition.

2. Apparatus according to claim 1 further comprising a trigger transmitter separate from the mobile apparatus, the trigger transmitter being configured to generate the trigger signal.

3. Apparatus according to claim 2, in which the trigger transmitter and the trigger receiver are configured for transmission of the trigger signal wirelessly to the trigger receiver.

4. Apparatus according to claim 3, in which the wireless trigger signal has a carrier signal of a lower power than a carrier signal of wirelessly transmitted stored data.

5. Apparatus according to any one of claims 2 to 4, in which the trigger transmitter is configured to be stationary when in use and to provide the trigger signal over a predetermined range.

6. Apparatus according to claim 5, in which the predetermined range is less than 5 m.

7. Apparatus according to any preceding claim, in which at least one of the trigger signal and a signal conveying the transmitted stored data is a radio frequency signal.

8. Apparatus according to any preceding claim, in which the trigger receiver comprises a receiver device that is operative upon reception of the trigger signal and in which the receiver device is a passive electrical device.

9. Apparatus according to any one of claims 2 to 8 when depending from claim 2, in which the trigger transmitter is configured to provide a trigger signal comprising a channel select signal and the wireless communications apparatus is configured to transmit stored data on a selected one of a plurality of channels, the channel being selected in dependence upon the channel select signal.

10. Apparatus according to any preceding claim further comprising a wireless data transceiver, which is configured to be stationary when in use, the wireless data transceiver being configured to receive stored data transmitted by the wireless data communications apparatus.

11. Apparatus according to any preceding claim, in which the wireless data communications apparatus is configured to transmit stored data over a maximum range of substantially 200 m.

12. Apparatus according to any preceding claim, in which the data acquisition apparatus is configured to acquire data relating to movement of the beast to which the mobile apparatus is attached.

13. Apparatus according to claim 12, in which the data acquisition apparatus comprises at least one of: an accelerometer; a mercury switch; and a gyroscope.

14. Apparatus according to any preceding claim, in which the mobile apparatus is configured to be attached to a cow and to be operative to acquire data relating to movement of at least part of the anatomy of the cow.

15. A method of acquiring and transmitting data, the method comprising:
acquiring and storing data by means of data acquisition apparatus of mobile apparatus,
the mobile apparatus being attached to a beast (20);
receiving a trigger signal in a trigger receiver (64) of the mobile apparatus and changing a wireless data communications apparatus of the mobile apparatus from an inoperative condition in which substantially no electrical power is consumed by the wireless data communication apparatus (74) to an operative condition in dependence upon the received trigger signal; and
transmitting stored data wirelessly from the mobile device by means of wireless data communications apparatus (74) when the wireless data communications apparatus (74) is in the operative condition.

## Patentansprüche

1. Datenbeschaffungs- und -übertragungsvorrichtung (10), umfassend:
eine mobile Vorrichtung (22), die dafür ausgelegt ist, an einem Tier (20) angebracht zu werden, wobei die Mobilvorrichtung Folgendes umfasst: eine Datenbeschaffungsvorrichtung, die dafür ausgelegt ist, Daten zu beschaffen und zu speichern; eine drahtlose Datenkommunikationsvorrichtung (74), die zwischen einem betriebsfähigen Zustand, in dem gespeicherte Daten drahtlos übertragen werden, und einem nicht betriebsfähigen Zustand, in dem im Wesentlichen kein elektrischer Strom durch die drahtlose Einrichtungskommunikationsvorrichtung (74) verbraucht wird, umschaltbar ist; und **gekennzeichnet durch** einen Trigger-Empfänger (64), der dafür ausgelegt ist, die drahtlose Datenkommunikationsvorrichtung in Abhängigkeit von einem Triggersignal von dem Trigger-Empfänger (64) aus dem nicht betriebsfähigen Zustand in den betriebsfähigen Zustand zu versetzen, wobei die Datenbeschaffungsvorrichtung Daten beschafft und speichert, während sich die drahtlose Datenkommunikationsvorrichtung (74) in dem nicht betriebsfähigen Zustand befindet.

2. Vorrichtung nach Anspruch 1, die ferner einen Trigger-Sender umfasst, der von der mobilen Vorrichtung getrennt ist, wobei der Trigger-Sender dafür ausgelegt ist, das Triggersignal zu erzeugen.

3. Vorrichtung nach Anspruch 2, wobei der Trigger-Sender und der Trigger-Empfänger für drahtlose Übertragung des Triggersignals zu dem Trigger-Empfänger ausgelegt sind.

4. Vorrichtung nach Anspruch 3, wobei das drahtlose Triggersignal ein Trägersignal einer geringeren Leistung als ein Trägersignal drahtlos übertragener gespeicherter Daten aufweist.

5. Vorrichtung nach einem der Ansprüche 2 bis 4, wobei der Trigger-Sender dafür ausgelegt ist, im Gebrauch stationär zu sein und das Triggersignal über eine vorbestimmte Entfernung bereitzustellen.

6. Vorrichtung nach Anspruch 5, wobei die vorbestimmte Entfernung kleiner als 5 m ist.

7. Vorrichtung nach einem der vorhergehenden Ansprüche, wobei das Triggersignal und/oder ein die übertragenen gespeicherten Daten übermittelndes Signal ein Hochfrequenzsignal ist.

8. Vorrichtung nach einem der vorhergehenden Ansprüche, wobei der Trigger-Empfänger eine Empfängereinrichtung umfasst, die beim Empfang des Triggersignals betriebsfähig ist und wobei die Empfängereinrichtung eine passive elektrische Einrichtung ist.

9. Vorrichtung nach einem der Ansprüche 2 bis 8 bei Abhängigkeit von Anspruch 2, wobei der Trigger-Sender dafür ausgelegt ist, ein Triggersignal bereitzustellen, das ein Kanalauswahlsignal umfasst, und die drahtlose Kommunikationsvorrichtung dafür ausgelegt ist, gespeicherte Daten auf einem ausgewählten mehrerer Kanäle zu senden, wobei der Kanal in Abhängigkeit von dem Kanalauswahlsignal ausgewählt wird.

10. Vorrichtung nach einem der vorhergehenden Ansprüche, die ferner einen drahtlosen Datensender/- empfänger umfasst, der dafür ausgelegt ist, im Gebrauch stationär zu sein, wobei der drahtlose Datensender/- empfänger dafür ausgelegt ist, durch die drahtlose Datenkommunikationsvorrichtung gesendete gespeicherte Daten zu empfangen.

11. Vorrichtung nach einem der vorhergehenden Ansprüche, wobei die drahtlose Datenkommunkationsvorrichtung dafür ausgelegt ist, gespeicherte Daten über eine maximale Entfernung von im Wesentlichen 200 m zu übertragen.

12. Vorrichtung nach einem der vorhergehenden Ansprüche, wobei die Datenbeschaffungsvorrichtung dafür ausgelegt ist, Daten im Bezug auf Bewegung des Tiers, an dem die mobile Vorrichtung angebracht ist, zu beschaffen.

13. Vorrichtung nach Anspruch 12, wobei die Datenbeschaffungsvorrichtung mindestens einen der folgenden umfasst: einen Beschleunigungsmesser; einen Quecksilberschalter; und einen Kreisel.

14. Vorrichtung nach einem der vorhergehenden Ansprüche, wobei die mobile Vorrichtung dafür ausgelegt ist, an einer Kuh angebracht zu werden und betriebsfähig zu sein, um Daten in Bezug auf Bewegung mindestens eines Teils der Anatomie der Kuh zu beschaffen.

15. Verfahren zum Beschaffen und Übertragen von Daten, wobei das Verfahren Folgendes umfasst:
Beschaffen und Speichern von Daten mittels einer Datenbeschaffungsvorrichtung der mobilen Vorrichtung,
wobei die mobile Vorrichtung an einem Tier (20) angebracht wird;
Empfangen eines Triggersignals in einem Trigger-Empfänger (64) der mobilen Vorrichtung und Versetzen einer drahtlosen Datenkommunikationsvorrichtung der mobilen Vorrichtung von einem nicht betriebsfähigen Zustand, in dem im Wesentlichen kein elektrischer Strom durch die drahtlose Datenkommunikationsvorrichtung (74) verbraucht wird, in einen betriebsfähigen Zustand abhängig von dem empfangenen Triggersignal; und
Drahtloses Übertragen gespeicherter Daten von der mobilen Einrichtung mittels der drahtlosen Datenkommunikationsvorrichtung (74), wenn sich die drahtlose Datenkommunikationsvorrichtung (74) in dem betriebsfähigen Zustand befindet.

## Revendications

1. Appareil d'acquisition et de transmission de données (10) comprenant : un appareil mobile (22) conçu pour être attaché à un animal (20), l'appareil mobile comprenant : un appareil d'acquisition de données conçu pour acquérir et stocker des données ; un appareil de communication de données sans fil (74) pouvant être commuté entre un état fonctionnel, dans lequel les données stockées sont transmises sans fil, et un état non fonctionnel dans lequel aucune énergie électrique n'est essentiellement consommée par l'appareil de communication de données sans fil (74) ; **caractérisé par** un récepteur de déclenchement (64) conçu pour faire passer l'appareil de communication de données sans fil de l'état non fonctionnel à l'état fonctionnel en fonction d'un signal de déclenchement provenant du récepteur de déclenchement (64), lequel appareil d'acquisition de données acquiert et stocke des données pendant que l'appareil de communication de données sans fil (74) est à l'état non fonctionnel.

2. Appareil selon la revendication 1, comprenant en outre un émetteur de déclenchement distinct de l'appareil mobile, lequel émetteur de déclenchement est conçu pour générer le signal de déclenchement.

3. Appareil selon la revendication 2, dans lequel l'émetteur de déclenchement et le récepteur de déclenchement sont conçu pour la transmission sans fil du signal de déclenchement vers le récepteur de déclenchement.

4. Appareil selon la revendication 3, dans lequel le signal de déclenchement sans fil possède un signal de porteuse d'une puissance moindre que le signal de porteuse des données stockées transmises sans fil.

5. Appareil selon l'une quelconque des revendications 2 à 4, dans lequel l'émetteur de déclanchement est conçu pour être stationnaire lors de l'utilisation et pour envoyer le signal de déclenchement sur une distance prédéterminée.

6. Appareil selon la revendication 5, dans lequel la distance prédéterminée est inférieure à 5 m.

7. Appareil selon l'une quelconque des revendications précédentes, dans lequel l'un au moins du signal de déclenchement et d'un signal transportant les données stockées transmises est un signal radiofréquence.

8. Appareil selon l'une quelconque des revendications précédentes, dans lequel le récepteur de déclenchement comprend un dispositif récepteur qui fonctionne lors de la réception du signal de déclenchement, et dans lequel le dispositif récepteur est un dispositif électrique passif.

9. Appareil selon l'une quelconque des revendications 2 à 8 lorsque dépendantes de la revendication 2, dans lequel l'émetteur de déclenchement est conçu pour fournir un signal de déclenchement comprenant un signal de sélection de canal, tandis que l'appareil de communication sans fil est conçu pour transmettre les données stockées sur un canal choisi parmi lesdits plusieurs canaux, le canal étant choisi en fonction du signal de sélection de canal.

10. Appareil selon l'une quelconque des revendications précédentes, comprenant en outre un émetteur-récepteur de données sans fil conçu pour être stationnaire lors de l'utilisation, lequel émetteur-récepteur de données sans fil est conçu pour recevoir des données stockées transmises par l'appareil de communication de données sans fil.

11. Appareil selon l'une quelconque des revendications précédentes, dans lequel l'appareil de communication de données sans fil est conçu pour transmettre des données stockées sur une distance maximale d'essentiellement 200 m.

12. Appareil selon l'une quelconque des revendications précédentes, dans lequel l'appareil d'acquisition de données est conçu pour acquérir des données concernant le mouvement de l'animal auquel l'appareil mobile est attaché.

13. Appareil selon la revendication 12, dans lequel l'appareil d'acquisition de données comprend l'un au moins d'un accéléromètre, d'un commutateur à mercure et d'un gyroscope.

14. Appareil selon l'une quelconque des revendications précédentes, dans lequel l'appareil mobile est conçu pour être attaché à une vache et fonctionner afin d'acquérir des données concernant le mouvement d'une partie au moins de l'anatomie de la vache.

15. Procédé d'acquisition et de transmission de données, lequel procédé consiste à :
- acquérir et stocker des données à l'aide d'un appareil d'acquisition de données d'un appareil mobile, lequel appareil mobile est attaché à un animal (20);
- recevoir un signal de déclenchement dans un récepteur de déclenchement (64) de l'appareil mobile et faire passer un appareil de communication de données sans fil de l'appareil mobile d'un état non fonctionnel dans lequel aucune énergie électrique n'est essentiellement consommée par l'appareil de communication de données sans fil (74) à un état fonctionnel en fonction du signal de déclenchement reçu ; et
- transmettre sans fil les données stockées depuis le dispositif mobile à l'aide de l'appareil de communication de données sans fil (74) lorsque l'appareil de communication de données sans fil (74) est à l'état fonctionnel.
